(19) Europäisches Patentamt
European Patent Office
Office européen des brevets

(11) Veröffentlichungsnummer: **0 140 252**
**B1**

(12) # EUROPÄISCHE PATENTSCHRIFT

(45) Veröffentlichungstag der Patentschrift: **07.01.88**

(51) Int. Cl.[4]: **C 09 B 45/24**, D 06 P 3/24, D 06 P 3/32

(21) Anmeldenummer: **84112284.9**

(22) Anmeldetag: **12.10.84**

(54) **Polyazofarbstoffe.**

(30) Priorität: **19.10.83 DE 3337885**

(43) Veröffentlichungstag der Anmeldung: **08.05.85 Patentblatt 85/19**

(45) Bekanntmachung des Hinweises auf die Patenterteilung: **07.01.88 Patentblatt 88/1**

(84) Benannte Vertragsstaaten: **CH DE FR GB IT LI**

(56) Entgegenhaltungen:
**EP - A - 0 045 868**
**EP - A - 0 073 950**
**EP - A - 0 078 007**
**EP - A - 0 091 020**
**US - A - 2 042 810**
**US - A - 2 080 191**
**US - A - 2 200 445**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Bergmann, Udo, Dr., Merckstrasse 26, D-6100 Darmstadt (DE)**
Erfinder: **Hansen, Guenter, Dr., Alwin-Mittasch-Platz 8, D-6700 Ludwigshafen (DE)**
Erfinder: **Lach, Dietrich, Dr., Gartenweg 16, D-6701 Friedelsheim (DE)**
Erfinder: **Zeidler, Georg, Mutterstadter Strasse 7, D-6701 Dannstadt-Schauernheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

In der US-A-2 042 810 wird ein Kupfer/Chrom-Komplex eines Disazofarbstoffs beschrieben, der entsteht, wenn man 2-Amino-4-sulfamoylphenol und 4-Chlor-2-amino-phenol-4-sulfonsäure diazotiert und die resultierenden Diazoniumverbindungen auf Resorcin kuppelt. Weiterhin ist aus der US-A-2 080 191 der Mangan/Chrom-Komplex desjenigen Disazofarbstoffs bekannt, der anstelle von Resorcin m-Phenylendiamin als Kupplungskomponente aufweist. Beide Farbstoffe zeigen jedoch ungenügende Echtheitseigenschaften auf Leder.

Gegenstand der EP-A-73 950 sind Metall- und Mischmetall-Komplexe von Disazofarbstoffen, die Resorcin als Kupplungskomponente und 1-Amino- 2- hydroxy- 6- nitronaphthalinsulfonsäure sowie 2-Aminophenol oder dessen Derivate als Diazokomponente aufweisen.

Schliesslich sind aus der EP-A-78 007 Eisenkomplexe von Disazofarbstoffen bekannt, die Resorcin als Kupplungskomponente und gegebenenfalls durch Nitro substituierte 2-Aminophenolsulfonsäure sowie Anilin und Anilinsulfonsäure, die beide durch Naphthylamino substituiert sind, als Diazokomponenten aufweisen.

Die vorliegende Erfindung betrifft Mangan-, Nickel-, Kobalt-, Chrom-, Kupfer- oder Eisenkomplexe von sulfonsäuregruppenhaltigen Verbindungen der allgemeinen Formel I

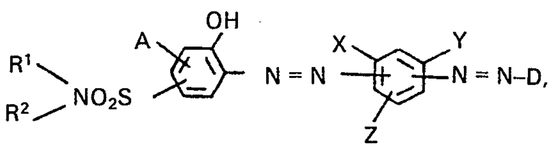

in der

A Wasserstoff, Chlor, Methyl oder Methoxy,

X Hydroxy oder Amino,

Y Hydroxy oder gegebenenfalls substituiertes Amino,

Z Wasserstoff, Alkyl, Alkoxy, Chlor, Hydroxysulfonyl oder ein Rest der Formel

$$D{-}N = N{-},$$

$R^1$ Wasserstoff oder gegebenenfalls substituiertes Alkyl,

$R^2$ Wasserstoff oder gegebenenfalls substituiertes Alkyl oder Aryl und

$R^1$ und

$R^2$ zusammen mit dem Stickstoff ein heterocyclischer Rest sind, wobei D der Rest einer Diazokomponente aus der Anilin- oder Aminonaphthalinreihe ist, der durch Chlor, Brom, Methyl, Ethyl, Methoxy, Ethoxy, Carboxyl, Nitro, Hydroxysulfonyl, Amino,

$CH_3NH$, $C_2H_5NH$, $(CH_3)_2N$, $(C_2H_5)_2N$,

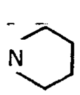, 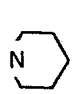, 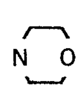

Arylazo oder den Rest

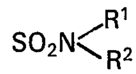, in dem $R^1$ und $R^2$ die oben genannte Bedeutung besitzen, substituiert sein kann.

Substituierte Aminoreste Y sind z.B.

$CH_3NH$, $C_2H_5{-}NH$, $(CH_3)_2N$, $(C_2H_5)_2N$, 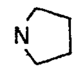, 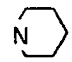, oder 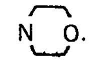.

Alkyl- und Alkoxyreste Z sind z.B. Methyl, Ethyl, Propyl, Butyl, Methoxy oder Ethoxy.

Alkylreste $R^1$ und $R^2$ sind beispielsweise:

$CH_3$, $C_2H_5$, $C_3H_7$, $C_4H_9$, $C_6H_{13}$, $C_8H_{17}$, 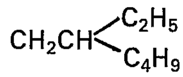, $CH_2CH_2OH$, $CH_2CHOHCH_3$ oder $CH_2C_6H_5$.

Für $R^2$ sind als Arylreste z.B. $C_6H_5$, $C_6H_4Cl$, $C_6H_4CH_3$, $C_6H_4OCH_3$ oder $C_6H_4SO_3H$ sowie Mono- oder Disulfonaphthyl zu nennen.

$R^1$ und $R^2$ zusammen mit dem Stickstoff sind z.B.

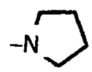, 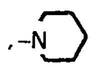 oder 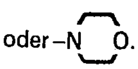.

Die Reste D stammen vorzugsweise aus der Anilin- oder Aminonaphthalinreihe und können beispielsweise durch Chlor, Brom, Methyl, Ethyl, Methoxy, Ethoxy, Carboxyl, Nitro, Hydroxysulfonyl, gegebenenfalls substituiertes Amino, Arylazo oder

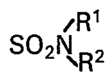 substituiert sein, $R^1$ und $R^2$ haben dabei die angegebene Bedeutung.

Einzelne Diazokomponenten sind beispielsweise:

Anilin, o-, m-, p-Toluidin, o-, m-, p-Chloranilin, o-, m-, p-Anisidin, o-, m-, p-Nitroanilin, 2-Nitro-4-methyl-anilin, 3-Nitro-4-methylanilin, 2-Nitro-4-chloranilin, 2-Methyl-5-nitroanilin, 2-Methyl-4-nitroanilin, 2-Chlor-4-nitroanilin, 4-Nitroanilin-2-methylsulfon, Anilin-o-, m-, p-sulfonsäure, 2-Amino-3-chlorbenzolsulfonsäure, 2-Amino-4-chlorbenzolsulfonsäure, 2-Amino-5-chlorbenzolsulfonsäure, 3-Amino-4-chlorbenzolsulfonsäure, 2-Chlor-5-aminobenzolsulfonsäure, 3-Chlor-4-aminobenzolsulfonsäure, 4-Amino-3,6-dichlorbenzolsulfonsäure, 2-Amino-5-methylbenzolsulfonsäure, 2-Methyl-5-aminobenzolsulfonsäure, 2-Methyl-4-aminobenzolsulfonsäure, 3-Amino-4,6-dimethylbenzolsulfonsäure, 2-Amino-5-methoxybenzolsulfonsäure, 2-Methoxy-5-aminobenzolsulfonsäure, 2-Amino-4-chlor-5-methylbenzolsulfonsäure, 2-Amino-4-methyl-5-chlorbenzolsulfonsäure, Anilin-2,4- und 2,5-disulfonsäure, 2-Amino-4,5-disulfotoluol, 2-Amino-3,5-disulfochlorbenzol, 2-Amino-3,5-disulfotoluol, 2-Amino-3,5-dimethylbenzolsulfonsäure, 4-Amino-2,5-disulfoanisol, 2-Amino-4-methoxy-benzolsulfonsäure, 2-Amino-4-methoxy-6-nitro-benzolsulfonsäure, 3-Amino-6-methoxy-benzolsulfonsäure, 2-Ami-

no-5-methoxy-benzolsulfonsäure, 2-Amino-5-äthoxy-benzolsulfonsäure, 4-Amino-diphenyläther-2-sulfonsäure, 4-Amino-diphenylamin-2-sulfonsäure, 4-Nitro-4'-aminodiphenylamin-2-sulfonsäure,4-Nitro-3'-chlor-4'-amino-diphenylamin-2-sulfonsäure, 4-Nitro-4'-aminodiphenylamin-3'-sulfonsäure, 4-Methoxy-4'-amino-diphenylamin-2'-sulfonsäure, 4-Hydroxy-4'-amino-diphenylamin-2'-sulfonsäure, 2-Methoxy-4'-amino-diphenylamin-2'-sulfonsäure, 4-Methyl-4'-amino-diphenylamin-2'-sulfonsäure, 4'-Nitro-4-aminostilben-2,2'-disulfonsäure, 2-Amino-4-acetaminobenzolsulfonsäure, 2-Amino-5-acetaminobenzolsulfonsäure, o-, m-, p-Aminobenzoesäure sowie deren $C_1$–$C_4$-Alkylester, Anilin-3- und -4-sulfonamid, o- und p-Aminobenzonitril, Acetmetaminsäure, Gelb- und Digelbsäure, 4-Amino-azotoluol-4'-sulfonsäure, 4-Allylsulfonylanilin, 3-Allylsulfonylanilin, 2-Allylsulfonylanilin, 4-(Propenyl-1')-sulfonylanilin, 2-Amino-5-sulfobenzoesäure, 3-Amino-6-nitrobenzoesäure, 3-Nitro-4-aminobenzoesäure, 2-Morpholino-anilin, 2-Piperidino-anilin, 2-Pyrrolidinoanilin, 2-(4-Methylpiperazino)-anilin, 4-Morpholino-anilin, 4-Piperazino-anilin, 4-Pyrrolidino-anilin, 4-(4-Methylpiperazino)-anilin, 3-Amino-4-morpholino-benzolsulfonsäure, 3-Amino-4-piperidino-benzolsulfonsäure, 3-Amino-4-pyrrolidino-1-benzolsulfonsäure, 3-Amino-4-(4-methylpiperazino)-benzolsulfonsäure, 3-Amino-6-morpholino-benzolsulfonsäure, 3-Amino-6-piperazino-benzolsulfonsäure, 3-Amino-6-pyrrolidino-benzolsulfonsäure, 3-Amino-6-(4-methylpiperazino)-benzolsulfonsäure, 2-Naphthylamin-1-sulfonsäure, 2-Naphthylamin-6-sulfonsäure, 2-Naphthylamin-7-sulfonsäure, 2-Naphthylamin-8-sulfonsäure, 2-Naphthylamin-1,5-disulfonsäure, 2-Naphthylamin-3,6-disulfonsäure, 2-Naphthylamin-4,8-disulfonsäure, 2-Naphthylamin-5,7-disulfonsäure, 2-Naphthylamin-6,8-disulfonsäure, 2-Naphthylamin-6-nitro-4,8-disulfonsäure, 2-Naphthylamin-1,5,7-trisulfonsäure, 2-Naphthylamin-3,6,8-trisulfonsäure, 2-Naphthylamin-4,6,8-trisulfonsäure, 1-Naphthylamin-2-sulfonsäure, 1-Naphthylamin-3-sulfonsäure, 1-Naphthylamin-4-sulfonsäure, 1-Naphthylamin-5-sulfonsäure, 1-Naphthylamin-6-sulfonsäure, 1-Naphthylamin-7-sulfonsäure, 1-Naphthylamin-8-sulfonsäure, 1-Naphthylamin-3,6-disulfonsäure, 1-Naphthylamin-3,8-disulfonsäure, 1-Naphthylamin-4,7-disulfonsäure, 1-Naphthylamin-4,8-disulfonsäure, 1-Naphthylamin-3,6,8-trisulfonsäure oder 1-Naphthylamin-4,6,8-trisulfonsäure.

Ferner sind zu nennen die Verbindungen der Formeln:

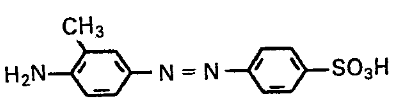 ,

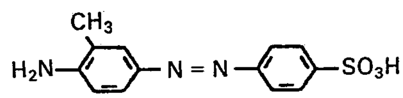 ,

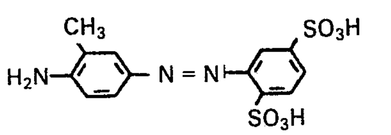 ,

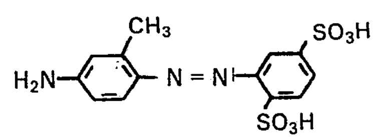 ,

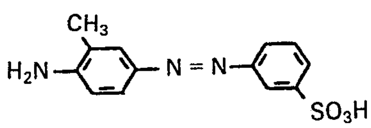 ,

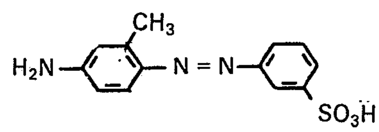 ,

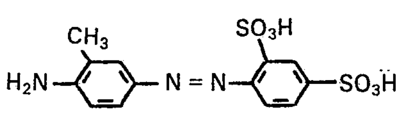 ,

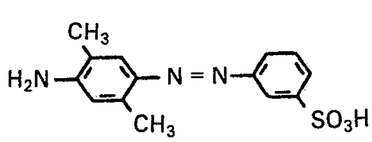 ,

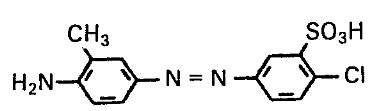 ,

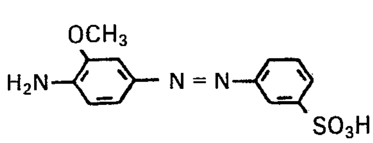 ,

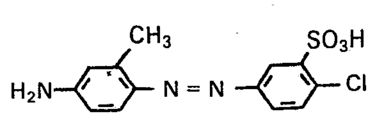 ,

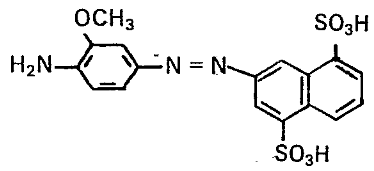 ,

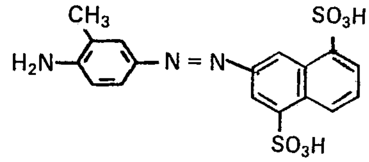 ,

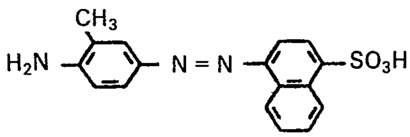 ,

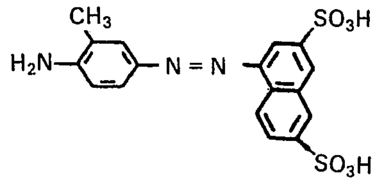 ,

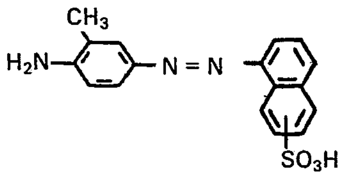 ,

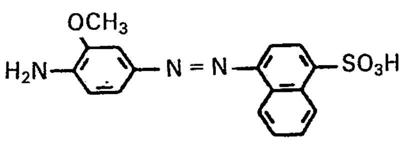 ,

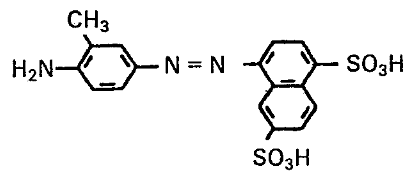 ,

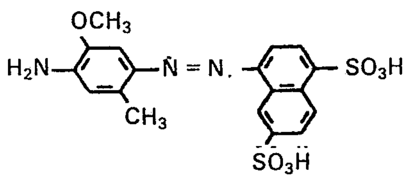 ,

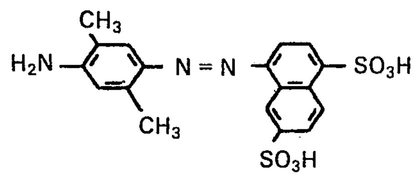 ,

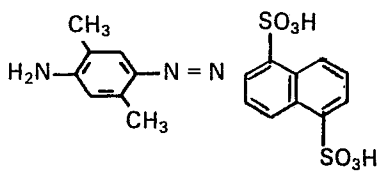 ,

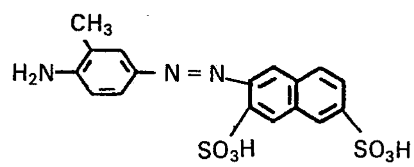 ,

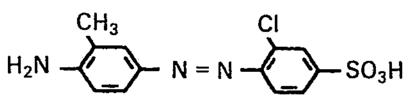 ,

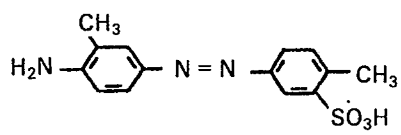 ,

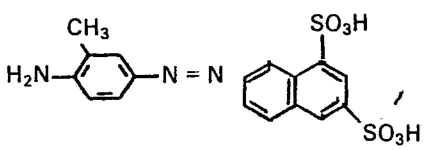 ,

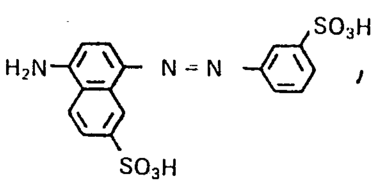 ,

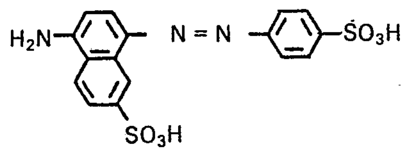 ,

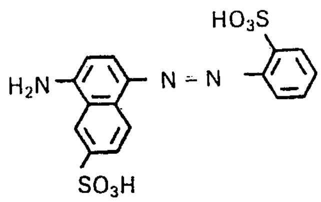
,

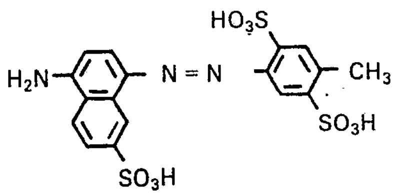
,

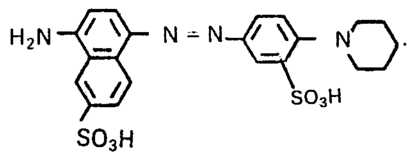
,

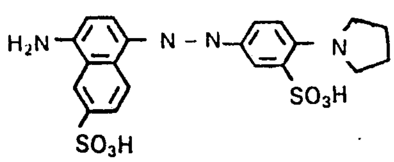
,

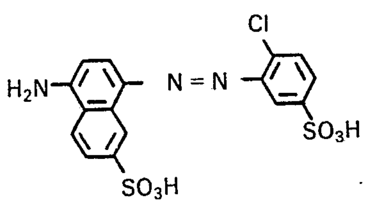
,

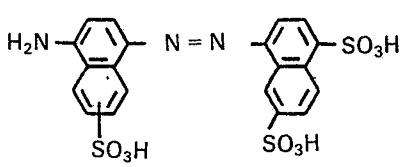

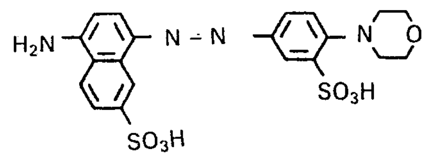
,

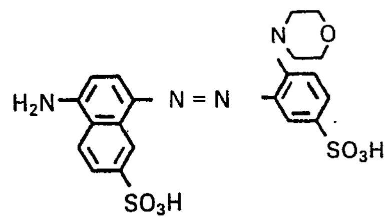
,

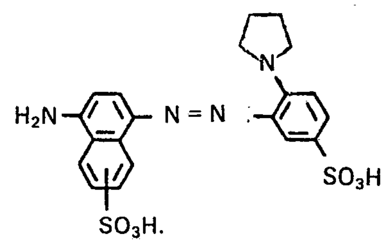
,

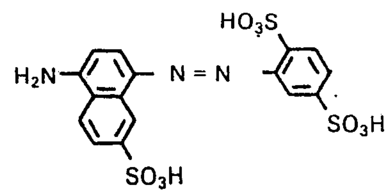
,

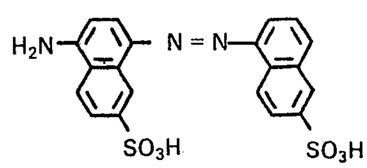
,

Als Metalle für die Metallkomplexe sind z.B. Mangan, Nickel, Kobalt, Chrom, Kupfer und insbesondere Eisen zu nennen.

Zur Herstellung der Verbindungen der Formel I kann man in an sich bekannter Weise z.B. eine Diazoniumverbindung von Aminen der Formel

$$D{-}NH_2$$

mit Kupplungskomponenten der Formel

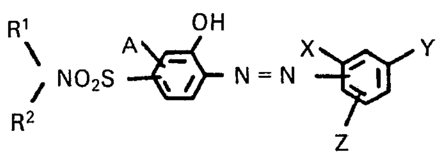

umsetzen und die Reaktionsprodukte gegebenenfalls in die Metallkomplexe überführen.

Da die Reste D gleich oder verschieden sein können, kann man für Z= D–N=N– auch noch eine nachträgliche zweite Kupplung vornehmen.

Einzelheiten der Herstellung können den Beispielen entnommen werden, in denen sich Angaben über Teile und Prozente, sofern nicht anders vermerkt, auf das Gewicht beziehen.

Die Farbstoffe der Formel I und ihre Metallkomplexe ergeben auf stickstoffhaltigen Fasern, Papier und insbesondere Leder braune Färbungen mit zum Teil sehr guten Echtheiten. Hervorzuheben sind z.B. die guten Lichtechtheiten und das gute Aufbauvermögen auf Leder.

Von besonderer Bedeutung sind Verbindungen der Formel Ia

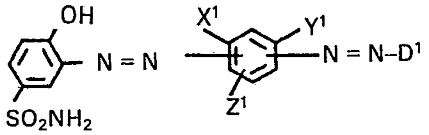

in der

X[1] Hydroxy oder Amino,

Y[1] Hydroxy oder Amino,

Z[1] Wasserstoff, Methyl oder Hydroxysulfonyl und

D[1] sulfogruppenhaltiges gegebenenfalls noch durch Chlor, Brom, Nitro, Phenylamino, 4-Nitro-2-sulfophenylamino, Methyl, Ethyl, Methoxy oder Ethoxy substituiertes Phenyl oder Naphthyl sind in Form der Eisenkomplexe.

Weiterhin sind von Bedeutung Verbindungen der Formel Ia, bei denen Z ein Rest der Formel $D^1$–N=N– ist.

Bevorzugt sind weiterhin Farbstoffe der Formel I mit zwei oder insbesondere einer Sulfogruppe.

Beispiel 1

18,8 Teile 2-Aminophenol-4-sulfonsäureamid werden in der üblichen Weise diazotiert und in sodaalkalischer Lösung auf 11 Teile Resorcin gekuppelt. Anschliessend fügt man zu der Lösung bei pH 9–10 das Diazoniumsalz aus 24,6 Teilen 1-Naphthylamin-4-sulfonsäure hinzu. Nach beendeter Kupplung wird das Reaktionsgemisch mit Essigsäure auf pH 5 eingestellt, mit 30 Teilen kristallisiertem Eisen-II-sulfat versetzt und bei pH 4–5 ungefähr 3 Stunden auf 90–95 °C erhitzt.

Nach erfolgter Metallisierung wird der Farbstoff durch Zugabe von Natriumchlorid abgeschieden, isoliert und getrocknet. Der Eisenkomplex der Verbindung der Formel

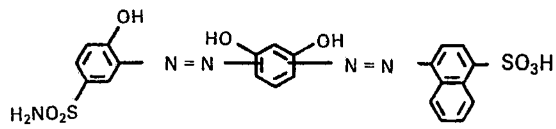

färbt Leder in licht- und nassechten braunen Tönen.

Die in der folgenden Tabelle genannten Farbstoffe lassen sich entsprechend der obigen Vorschrift synthetisieren.

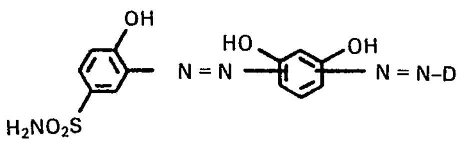

| | | Nuance der Färbung auf Leder der Metallkomplexe | | | | |
|---|---|---|---|---|---|---|
| Bsp. | D | Cu | Cr | Co | Ni | Fe |
| 2 | 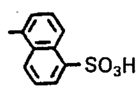 | rot-braun | | | | gelbbraun |
| 3 | 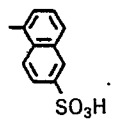 | | rot-brain | | | gelbbraun |
| 4 | 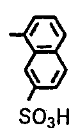 | | | | rot-braun | |
| 5 | 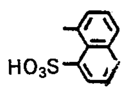 | rot-braun | | | | |
| 6 | 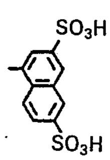 | | | | | gelbbraun |
| 7 | 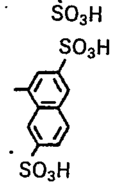 | | | rot-braun | | |

| Bsp. | D | Nuance der Färbung auf Leder der Metallkomplexe<br>Cu | Cr | Co | Ni | Fe |
|---|---|---|---|---|---|---|
| 8 | 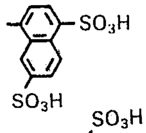 | rot-braun | | | | gelbbraun |
| 9 | 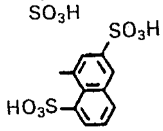 | | rot-braun | | rot-braun | gelbbraun |
| 10 | 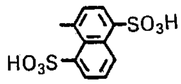 | | | rot-braun | | |
| 11 | 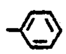 | | | | | gelbbraun |
| 12 | 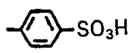 | rot-braun | | | rot-braun | |
| 13 | 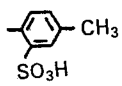 | | rot-braun | | | gelbbraun |
| 14 | 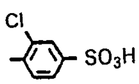 | rot-braun | | | | |
| 15 | 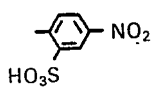 | | | rot-braun | | |
| 16 | 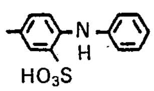 | | | | | gelbbraun |
| 17 | 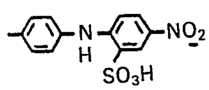 | | | | | gelbbraun |

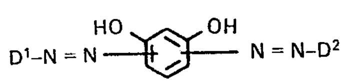

| Bsp. | $D^1$ | $D^2$ | Nuance der Färbung auf Leder der Metallkomplexe<br>Cu | Cr | Co | Ni | Fe |
|---|---|---|---|---|---|---|---|
| 18 | 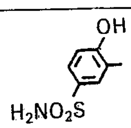 | 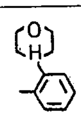 | | | | | gelb-braun |
| 19 | 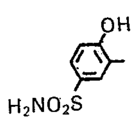 | 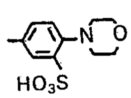 | rot-braun | | | | |
| 20 | 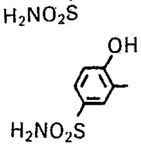 | 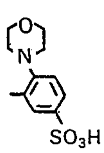 | | | rot-braun | | |

| Bsp. | D¹ | D² | Nuance der Färbung auf Leder der Metallkomplexe Cu | Cr | Co | Ni | Fe |
|---|---|---|---|---|---|---|---|
| 21 | 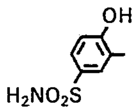 | 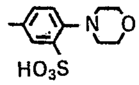 | | | | | braun |
| 22 | 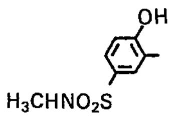 | 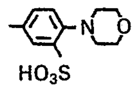 | rot-braun | | | | |
| 23 | 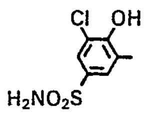 | 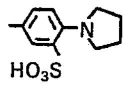 | | rot-braun | | | |
| 24 | 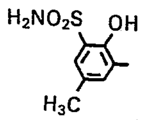 | 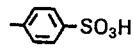 | | | | rot-braun | |
| 25 | 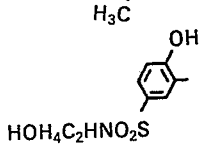 | 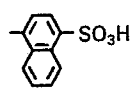 | | | | | braun |
| 26 | 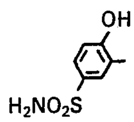 | 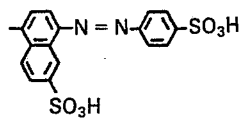 | rot-braun | | | | |
| 27 | 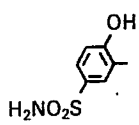 | 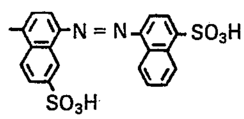 | | rot-braun | | | |
| 28 | 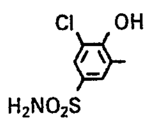 | 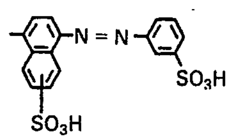 | | | rot-braun | | |
| 29 | 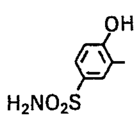 | 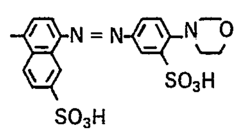 | | | | rot-braun | |
| 30 | 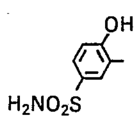 | 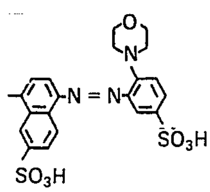 | rot-braun | | | | |
| 31 | 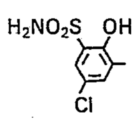 | 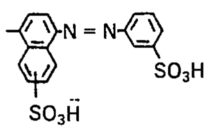 | | | rot-braun | | |

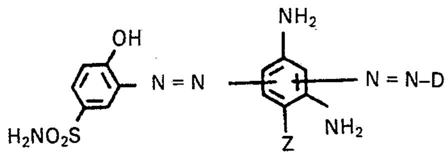

| Bsp. | D | Z | Nuance des Fe-Komplexes auf Leder |
|---|---|---|---|
| 32 | 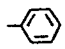 | $SO_3H$ | braun |
| 33 | 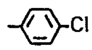 | $SO_3H$ | rot-braun |
| 34 | 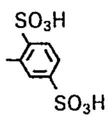 | $CH_3$ | braun |
| 35 | 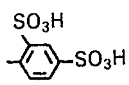 | $OCH_3$ | braun |
| 36 | 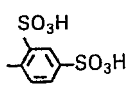 | Cl | gelb-braun |
| 37 | 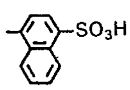 | $SO_3H$ | braun |
| 38 | 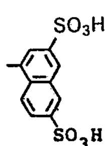 | Cl | braun |
| 39 | 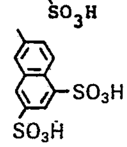 | Cl | braun |

Beispiel 40

18,8 Teile 2-Aminophenol-4-sulfonsäureamid werden in der üblichen Weise diazotiert und in sodaalkalischer Lösung auf 11 Teile Resorcin gekuppelt. Anschliessend fügt man zu der Lösung bei pH 9–10 das Diazoniumsalz aus 22,3 Teilen 1-Aminonaphthalin-6-sulfonsäure hinzu. Nachdem die Bildung des Disazofarbstoffes beendet ist, gibt man die Diazoverbindung aus 13 Teilen 4-Chlor-1-amino-benzol in der Weise hinzu, dass die Kupplung bei einem pH-Wert zwischen 6 und 7 erfolgt. Nach beendeter Kupplung wird das Reaktionsgemisch mit Essigsäure auf pH 5 eingestellt und mit krstallisiertem Eisen-II-sulfat analog Beispiel 1 komplexiert.

Nach erfolgter Metallisierung wird der Farbstoff durch Zugabe von Natriumchlorid abgeschieden, isoliert und getrocknet. Der Eisenkomplex der Verbindung der Formel

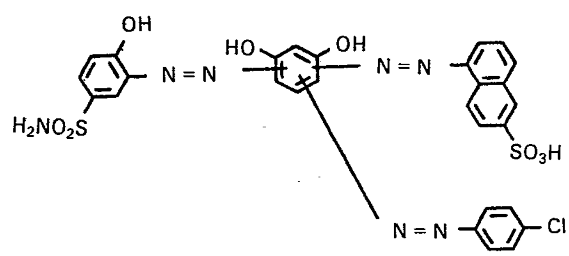

färbt vegetabilisch/synthetisch nachgegerbtes Chromrindleder in licht- und nassechten braunen Tönen.

Die in der nachfolgenden Tabelle genannten Farbstoffe lassen sich entsprechend der obigen Vorschrift herstellen.

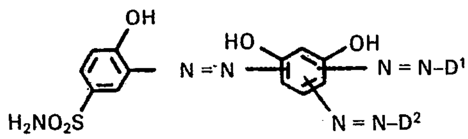

| Bsp. | $D^1$ | $D^2$ | Nuance des Fe-komplexes auf Leder |
|---|---|---|---|
| 41 | 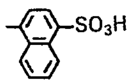 | 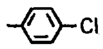 | gelb-braun |
| 42 | 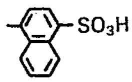 | 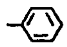 | braun |
| 43 | 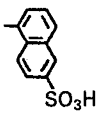 | 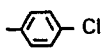 | gelb-braun |
| 44 | 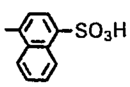 | 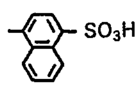 | braun |
| 45 | 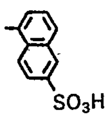 | 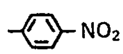 | rot-braun |
| 46 | 〃 | 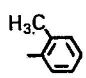 | braun |
| 47 | 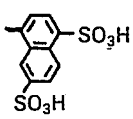 | 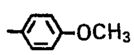 | braun |
| 48 | 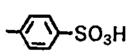 | 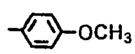 | rot-braun |
| 49 | 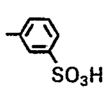 | 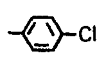 | rot-braun |
| 50 | 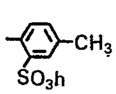 | 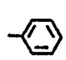 | braun |
| 51 | 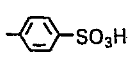 | 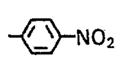 | braun |
| 52 | 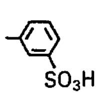 | 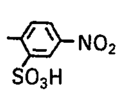 | braun |

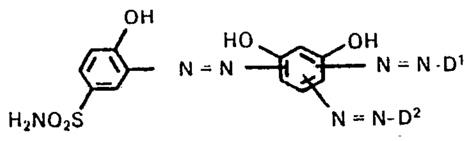

| Bsp. | D¹ | D² | Nuance des Fe-komplexes auf Leder |
|---|---|---|---|
| 53 | 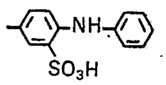 | 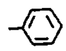 | gelb-braun |
| 54 | 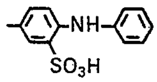 | 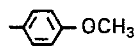 | gelb-braun |
| 55 | 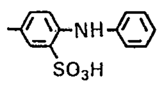 | 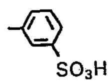 | braun |
| 56 | 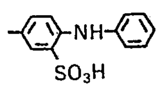 | 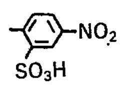 | braun |
| 57 | 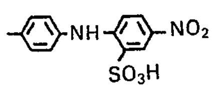 | 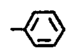 | braun |
| 58 | 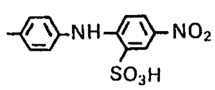 | 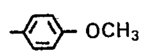 | |
| 59 | 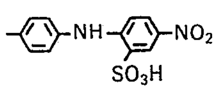 | 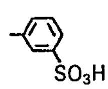 | braun |
| 60 | 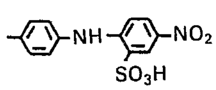 | 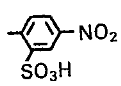 | braun |
| 61 | 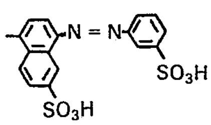 | 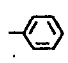 | rot-braun |
| 62 | 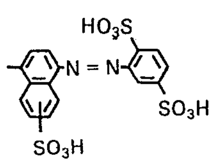 | 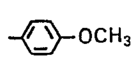 | rot-braun |

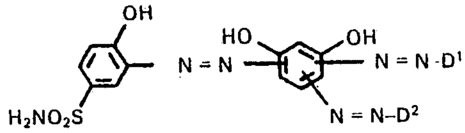

| Bsp. | $D^1$ | $D^2$ | Nuance des Fe-komplexes auf Leder |
|---|---|---|---|
| 63 | 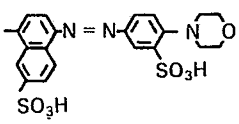 | 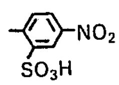 | rot-braun |
| 64 | 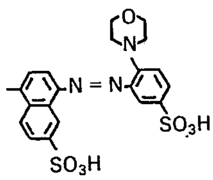 | 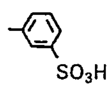 | braun |
| 65 | 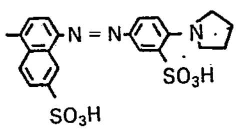 | 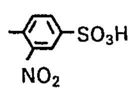 | braun |

Beispiel 66

18,8 Teile 2-Aminophenol-4-sulfonsäureamid werden in bekannter Weise diazotiert und sodaalkalisch auf 11 Teile m-Phenylendiamin gekuppelt. Anschliessend fügt man zu der Suspension bei pH 8–9 das Diazoniumsalz aus 22,3 Teilen 1-Naphthylamin-4-sulfonsäure hinzu. Nach beendeter Kupplung wird der Disazofarbstoff gemäss Beispiel 1 mit Eisen-III-chlorid komplexiert und isoliert.

Der Eisenkomplex der Verbindung der Formel

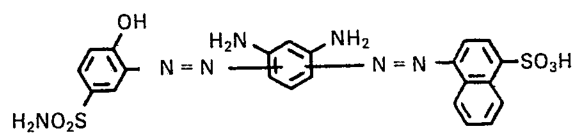

färbt Leder in braunen Tönen mit guten coloristischen Eigenschaften.

Die in der folgenden Tabelle genannten Farbstoffe lassen sich analog Beispiel 66 herstellen.

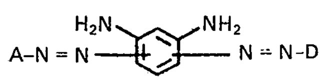

| Bsp. | A | D | Nuance des Fe-Komplexes auf Leder |
|---|---|---|---|
| 67 | 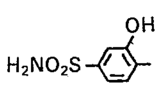 | 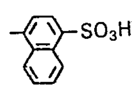 | braun |
| 68 | 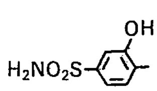 | 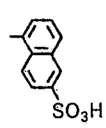 | braun |
| 69 | 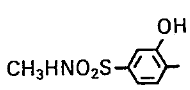 | 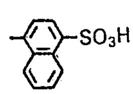 | braun |

| Bsp. | A | D | Nuance des Fe-Komplexes auf Leder |
|---|---|---|---|
| 70 | 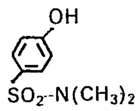 | 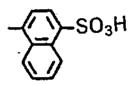 | braun |
| 71 | 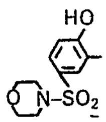 | 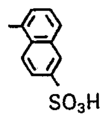 | braun |
| 72 | 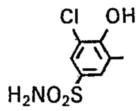 | 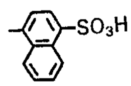 | braun |
| 73 | 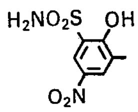 | 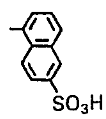 | braun |

Beispiel 74

18,8 Teile 2-Aminophenol-4-sulfonsäureamid werden in der üblichen Weise sodaalkalisch auf 11 Teile m-Phenylendiamin gekuppelt. Anschliessend fügt man dem Monoazofarbstoff bei pH 8–9 das Diazoniumsalz aus 22,3 Teilen 1-Aminonaphthalin-4-sulfonsäure hinzu. Nachdem die Bildung des Disazofarbstoffes beendet ist, wird mit der Diazoverbindung aus 11,1 Teilen 1-Amino-2-methoxybenzol in einem pH-Bereich von 6–7 gekuppelt und der Farbstoff danach mit Eisen-III-chlorid analog Beispiel 1 komplexiert und isoliert.

Der Eisenkomplex der Verbindung der Formel

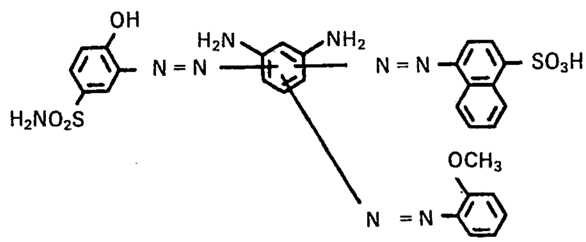

färbt Leder in gelbstichig braunen Tönen mit guten Gebrauchseigenschaften.

Die in der nachfolgenden Tabelle genannten Farbstoffe lassen sich analog der obigen Vorschrift synthetisieren.

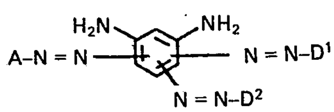

| Bsp. | A | $D^1$ | $D^2$ | Nuance des Fe-Komplexes auf Leder |
|---|---|---|---|---|
| 75 | 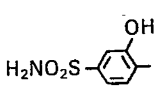 | 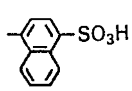 | 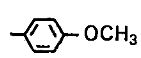 | braun |
| 76 | 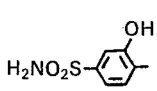 | 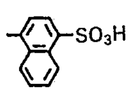 | 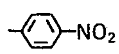 | braun |
| 77 | 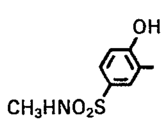 | 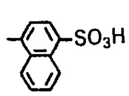 | 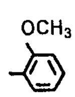 | braun |

| Bsp. | A | $D^1$ | $D^2$ | Nuance des Fe-Komplexes auf Leder |
|---|---|---|---|---|
| 78 | 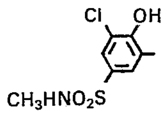 | 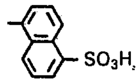 | 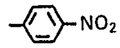 | braun |
| 79 | 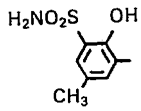 | 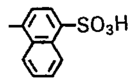 | 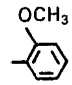 | braun |
| 80 | 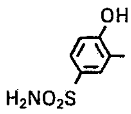 | 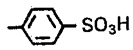 | 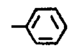 | braun |
| 81 | 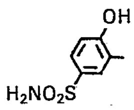 | 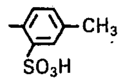 | 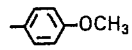 | braun |
| 82 | 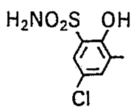 | 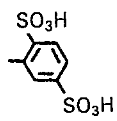 | 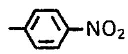 | braun |
| 83 | 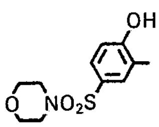 | 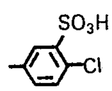 | 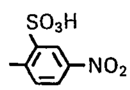 | braun |
| 84 | 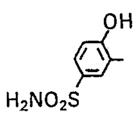 | 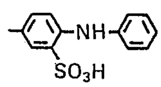 | 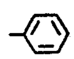 | braun |
| 85 | 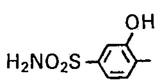 | 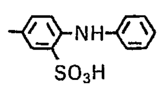 | 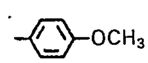 | braun |
| 86 | 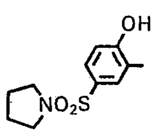 | 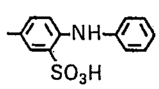 | 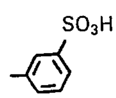 | braun |
| 87 | 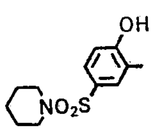 | 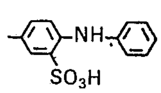 | 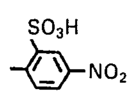 | braun |
| 88 | 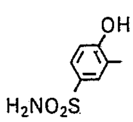 | 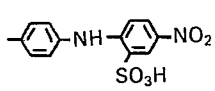 | 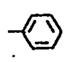 | braun |
| 89 | 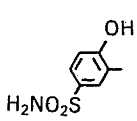 | 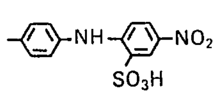 | 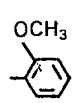 | braun |

| Bsp. | A | $D^1$ | $D^2$ | Nuance des Fe-Komplexes auf Leder |
|---|---|---|---|---|
| 90 | 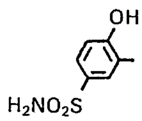 | 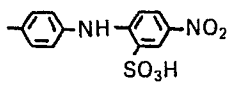 | 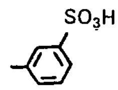 | braun |
| 91 | 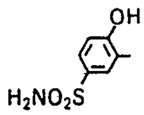 | 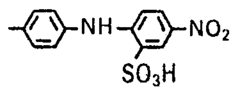 | 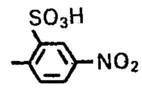 | braun |
| 92 | 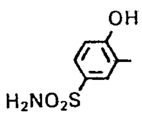 | 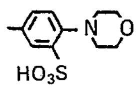 | 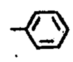 | braun |
| 93 | 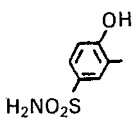 | 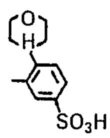 | 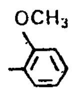 | braun |
| 94 | 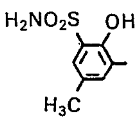 | 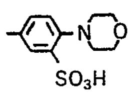 | 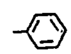 | braun |
| 95 | 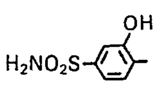 | 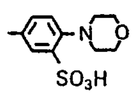 | 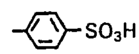 | braun |
| 96 | 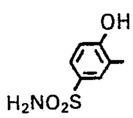 | 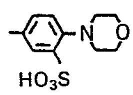 | 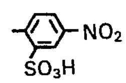 | braun |

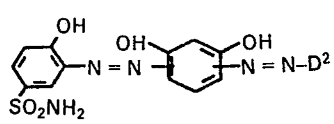

| Bsp. | $D^2$ | Nuance der Färbung auf Leder der Metallkomplexe Cu | Cr | Co | Ni | Fe |
|---|---|---|---|---|---|---|
| 97 | 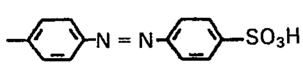 | rotbraun | | | | |
| 98 | 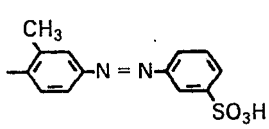 | | | | | rotbraun |
| 99 | 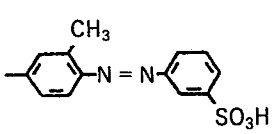 | | | | rotbraun | |

| Bsp. | $D^2$ | Nuance der Färbung auf Leder der Metallkomplexe Cu | Cr | Co | Ni | Fe |
|---|---|---|---|---|---|---|
| 100 | 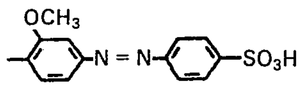 | | rotbraun | | | |
| 101 | 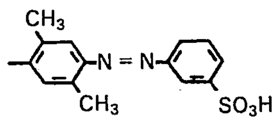 | | | | | rotbraun |
| 102 | 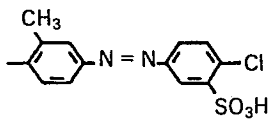 | | | rotbraun | | braun |
| 103 | 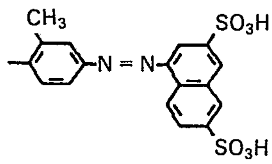 | rotbraun | | | | |
| 104 | 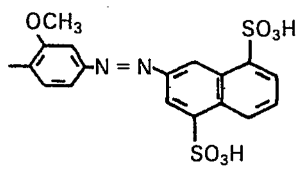 | | | rotbraun | | |
| 105 | 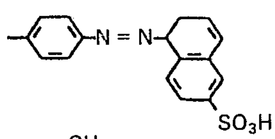 | rotbraun | | | | |
| 106 | 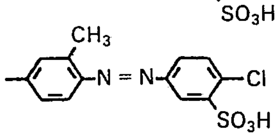 | | braun | | | gelb-braun |
| 107 | 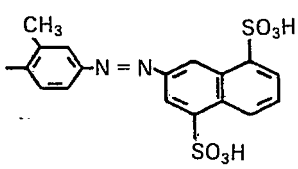 | | | | rotbraun | |
| 108 | 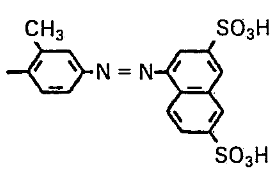 | | | rotbraun | | |

## Patentansprüche

1. Mangan-, Nickel-, Kobalt-, Chrom-, Kupfer- oder Eisenkomplexe von sulfonsäuregruppenhaltigen Verbindungen der allgemeinen Formel I

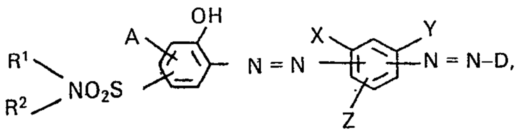

in der

A Wasserstoff, Chlor, Methyl oder Methoxy,

X Hydroxy oder Amino,

Y Hydroxy oder gegebenenfalls substituiertes Amino,

Z Wasserstoff, Alkyl, Alkoxy, Chlor, Hydroxysulfonyl oder ein Rest der Formel

$$D{-}N = N{-},$$

$R^1$ Wasserstoff oder gegebenenfalls substituiertes Alkyl,

$R^2$ Wasserstoff oder gegebenenfalls substituiertes Alkyl oder Aryl und

$R^1$ und

$R^2$ zusammen mit dem Stickstoff ein heterocyclischer Rest sind, wobei D der Rest einer Diazokomponente aus der Anilin- oder Aminonaphthalinreihe ist, der durch Chlor, Brom, Methyl, Ethyl, Methoxy, Ethoxy, Carboxyl, Nitro, Hydroxysulfonyl, Amino,

$CH_3NH$, $C_2H_5NH$, $(CH_3)_2N$, $(C_2H_5)_2N$,

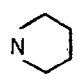 , 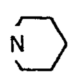 , 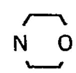

Arylazo oder den Rest

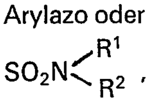 , in dem $R^1$ und $R^2$ die oben genannte Bedeutung besitzen, substituiert sein kann.

2. Metallkomplexe von Verbindungen gemäss Anspruch 1, bei denen

A Wasserstoff,

X und Y unabhängig voneinander Hydroxy oder Amino,

Z Wasserstoff,

$R^1$ Wasserstoff und

$R^2$ Wasserstoff oder durch Hydroxysulfonyl substituiertes Phenyl oder Naphthyl sind und D die angegebene Bedeutung hat.

3. Metallkomplexe von Verbindungen gemäss Anspruch 1 der Formel

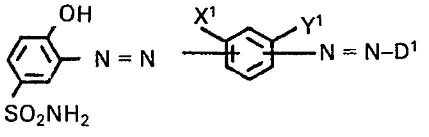

in der

$X^1$ Hydroxy oder Amino,

$Y^1$ Hydroxy oder Amino, und

$D^1$ sulfogruppenhaltiges gegebenenfalls noch durch Chlor, Brom, Nitro, Phenylamino, 4-Nitro-2-sulfophenylamino, Methyl, Ethyl, Methoxy, Ethoxy oder gegebenenfalls durch Chlor, Brom, Methyl, Ethyl, Methoxy, Ethoxy oder Hydroxysulfonyl substituiertes Phenyl- oder Naphthylazo substituiertes Phenyl oder Naphthyl sind.

4. Farbstoffe gemäss Anspruch 2 mit einer oder zwei Sulfogruppen.

5. Verwendung der Verbindungen gemäss Anspruch 1 zum Färben von stickstoffhaltigem Material, insbesondere Leder.

## Revendications

1. Complexes de manganèse, de nickel, de cobalt, de chrome, de cuivre ou de fer de composés contenant des groupes acide sulfonique de la formule générale I

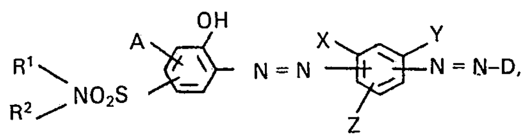

dans laquelle

A représente de l'hydrogène, du chlore, un radical méthyle ou méthoxy,

X un radical hydroxy ou amino,

Y un radical hydroxy ou un radical amino éventuellement substitué,

Z de l'hydrogène, du chlore, un radical alkyle, alkoxy, hydroxysulfonyle ou un radical de formule

$$D{-}N = N{-},$$

$R^1$ de l'hydrogène ou un radical alkyle éventuellement substitué,

$R^2$ de l'hydrogène ou un radical aryle ou alkyle éventuellement substitué et

$R^1$ et $R^2$ forment conjointement avec l'atome d'azote un radical hétérocyclique,

D étant le radical d'un composant diazoïque de la série de l'aniline ou de l'aminonaphtalène, qui peut être substitué par du chlore, du brome, un radical méthyle, éthyle, méthoxy, éthoxy, carboxyle, nitro, hydroxysulfonyle, amino,

$CH_3NH$, $C_2H_5NH$, $(CH_3)_2N$, $(C_2H_5)_2N$,

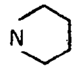 , 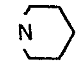 , 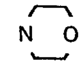

arylazo ou un radical 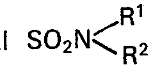 , dans lequel $R^1$ et $R^2$ ont les significations su sindiquées.

2. Complexes métalliques de composés suivant la revendication 1, dans lesquels

A est de l'hydrogène,

X et Y sont indépendamment l'un de l'autre un radical hydroxy ou amino,

Z est de l'hydrogène,

$R^1$ est de l'hydrogène et

$R^2$ est de l'hydrogène ou un radical naphtyle ou

phényle substitué par un groupe hydroxysulfonyle et

D a les significations susindiquées.

3. Complexes métalliques de composés suivant la revendication 1 de formule

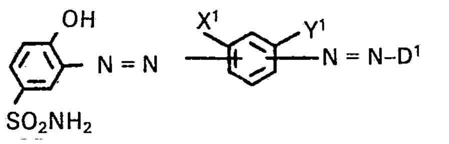

dans laquelle

$X^1$ est un radical hydroxy ou amino,

$Y^1$ est un radical hydroxy ou amino, et

$D^1$ est un groupe phényle ou naphtyle contenant des groupes sulfo et éventuellement encore substitué par du chlore, du brome, un groupe nitro, phénylamino, 4-nitro-2-sulfophénylamino, méthyle, éthyle, méthoxy, éthoxy ou phényl- ou naphtylazo éventuellement substitué par du chlore, du brome, un radical méthyle, éthyle, méthoxy, éthoxy ou hydroxysulfonyle.

4. Matières colorantes suivant la revendication 2, contenant un ou deux groupes sulfo.

5. Utilisation des composés suivant la revendication 1 pour la teinture d'une matière contenant de l'azote, en particulier le cuir.

**Claims**

1. A manganese, nickel, cobalt, chromium, copper or iron complex of a sulfo-containing compound of the general formule I

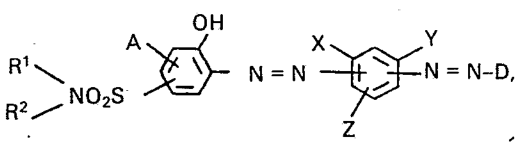

where

A is hydrogen, chlorine, methyl or methoxy,

X is hydroxyl or amino,

Y is hydroxyl or unsubstituted or substituted amino,

Z is hydrogen, alkyl, alkoxy, chlorine, hydroxysulfonyl or a radical of the formula

$$D{-}N = N{-},$$

$R^1$ is hydrogen or unsubstituted or substituted alkyl,

$R^2$ is hydrogen or unsubstituted or substituted alkyl or aryl, or

$R^1$ and

$R^2$, together with the nitrogen atom, form a heterocyclic radical, D being a radical of a diazo component from the aniline or aminonaphthalene series, which radical may be substituted by chlorine, bromine, methyl, ethyl, methoxy, ethoxy, carboxyl, nitro, hydroxysulfonyl, amino,

$CH_3NH$, $C_2H_5NH$, $(CH_3)_2N$, $(C_2H_5)_2N$,

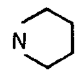 , 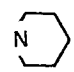 , 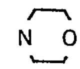

arylazo or the radical 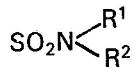 , where $R^1$ and $R^2$ have the above meanings.

2. A metal complex of a compound as claimed in claim 1, where

A is hydrogen,

X and Y independently of one another are hydroxyl or amino,

Z ist hydrogen,

$R^1$ is hydrogen,

$R^2$ is hydrogen or hydroxysulfonyl-substituted phenyl or naphthyl, and D has the specified meanings.

3. A metal complex of a compound as claimed in claim 1, of the formula

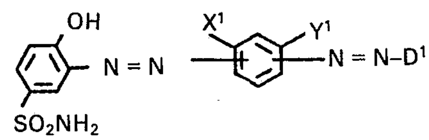

where

$X^1$ is hydroxyl or amino,

$Y^1$ is hydroyl or amino, and

$D^1$ is sulfo-containing phenyl or naphthyl which may be further substituted by chlorine, bromine, nitro, phenylamino, 4-nitro-2-sulfophenylamino, methyl, ethyl, methoxy or ethoxy or by phenyl- or naphthylazo which is unsubstituted or substituted by chlorine, bromine, methyl, ethyl, methoxy, ethoxy or hydroxysulfonyl.

4. A dye as claimed in claim 2, which contains one or two sulfo groups.

5. The use of a compound as claimed in claim 1 for dyeing nitrogen-containing material, in particular leather.